# EUROPEAN PATENT APPLICATION

(11) **EP 1 260 564 A1**
(43) Date of publication of application: **27.11.2002**
(21) Application number: 00971784.4
(22) Date of filing: 02.11.2000
(51) Int. Cl.: C09D 11/18, B43K 7/00

(54) **WATER-BASED INK FOR BALL PEN**

(30) Priority: 05.11.1999 JP 31556399
(71) Applicant: SAKURA COLOR PRODUCTS CORPORATION, Osaka-shi, Osaka 540-8508 (JP)
(72) Inventor: KURIHARA, Norimasa Sakura Color Products Corp., Osaka-shi Osaka 540-8508 (JP); INOUE, Hiroshi Sakura Color Products Corporation, Osaka-shi Osaka 540-8508 (JP)
(74) Representative: Darby, David Thomas
(86) International application number: PCT/JP00/07768
(87) International publication number: WO 01/034712

(57) **Abstract**

A water-based ink for ball pen which comprises a water-soluble organic solvent, water, and a polysaccharide and in which two particulate pigments consisting of a colored pigment and a metallic pigment are present in the same pigment phase as aggregates in the form in the form of spots with the aid of the water-soluble polymer serving as a binder to form a spot-form composite aggregate phase in the ink.

## Description

### Field of the Invention

The present invention relates to a water-based ink for ball pen and more particularly to a water-based ink for ball pen that can prevent a separation of pigment particles in a high viscosity liquid of polysaccharide for a long period.

### Prior Art

Conventionally, various water-based ink compositions for ball pen comprising at least a colorant, a polysaccharide and water are disclosed (Japan Unexamined Patent Publication No.59-74175,No.2-279777,No.4-214782,No.6-88050, No.8-151547, No.11-29734, No.11-80629, No.11-130998). These water-based ink compositions maintain their high viscosity at rest, however once applied to writing, due to a shear force generated by the rotation of a ball, they exhibit low viscosity and good writing characteristics.

However, these conventional water-based inks do not have sufficient stability for a long-term storage. Particularly, a water-based ink for ball pen containing a coloring pigment as a colorant often separates to a low viscosity component including coloring pigment and the other high viscosity component in an ink storage tube. Therefore, when a ball pen filled with such an ink that provides the said separating phenomena is allowed to stand with its pen tip oriented downward, the low viscosity components precipitate to the pen tip, thereby causing an ink leakage from the pen tip. When written using this ball pen, due to an excess ink flow, writing characteristics deteriorates and the written mark dries too slowly. Further, since the low viscosity components include an excess amount of the coloring pigment, the written mark has a concentrated dark color and an excess change in its tint is generated.

Generally, these are considered to have been caused by the coagulation of pigment particles, whose uniform dispersion is destroyed. For example, Japan Unexamined Patent Publication No.6-8805 tried to improve stability in long-term storage of an ink by adding succinoglucan as a polysaccharide in order to prevent the coagulation of the pigment particles (the enlargement of the particle diameter) and maintain the uniform dispersion of pigment particles. However, even in such an ink, actually, separation of the low viscosity components including an excess amount of the coloring pigment tends to occur inside an ink container and further segregation of color causes different depth of shade in written mark as mentioned above. In an extreme case, when a pen is used for a long period, a concentrated pigment solution flows out of a pen tip at the time of writing.

Particularly, with a water- based ink composition for ball pen comprising a polysaccharide such as rhamsan gum, welan gum, xanthan gum and succinoglucan, a water-soluble organic solvent and water, and further including an aluminum powder pigment together with a coloring pigment as a colorant, the coloring pigment tends to separate from the metallic powder pigment with the passage of time, as well as the above-mentioned separation, thereby generating the segregation of color. In an extreme case, when a pen is used for a long time, the high viscosity components including an aluminum powder pigment and the low viscosity component including a coloring pigment could develop to form an upper liquid layer and a lower liquid layer respectively. With these phenomena, the precipitation of the coloring pigment is visible even when the pen is laid down horizontally and gives rise to the problem that the outward appearance deteriorates remarkably. When the ink with such separation which has been stored with its pen tip oriented downward for a long time, is applied to writing, an expected metallic tone cannot be obtained in its written mark because the concentrated coloring pigment solution without aluminum metallic powder pigment flows out of the pen tip at first.

Accordingly, the object of the present invention is to provide a water- based ink for ball pen with excellent stability against long-term storage, capable of preventing separation of the coloring pigment, restraining segregation without any different depth of shade, providing the written mark with uniform color, and preventing leakage or excess flow of the ink.

The other object of the present invention is to provide a water-based ink for ball pen with excellent stability against long-term storage, capable of preventing separation of the coloring pigment from the other components and the metallic powder pigment even after being used for a long period, restraining segregation without any different depth of shade, providing the written mark with uniform color, and preventing leakage or excess flow of the ink.

### Summary of the invention

As a result of intensive study to achieve the above-mentioned objects, the present inventors have found that a water-based ink comprising a coloring pigment, a water-soluble organic solvent, water and a polysaccharide, in which pigment particles of said coloring pigment gather to form a spotted agglomerate phase, does not cause separation between the agglomerate phase of the coloring pigment and the other components.

Accordingly, even after being used for a long time, the separated liquid of the coloring pigments with high concentration does not appear in the ink remaining inside of an ink storage tube of a ball point pen.

When an ink is prepared by mixing a phase containing a conventional coloring pigment dispersed beforehand together with a vehicle phase containing a solution of a polysaccharide (the phase other than that containing the coloring pigment), both phases seem to be mixed uniformly just after the preparation. However, it is estimated that since the phase containing the coloring pigment is not compatible with the polysaccharide, both phases would separate with the passage of time.

In the present invention, by forming the agglomerate phase of the coloring pigment, a contact area between the phase containing the coloring pigment (hereinafter, called a "pigment phase") and the vehicle phase (the phase containing other than coloring pigment) becomes smaller, their compatibility improves, and as a result, it is estimated that the separation of both phases is made difficult.

Further, the inventors found that the different concentration of color or disappearance of color in a written mark can be prevented in a water-based ink for ball pen in which both pigment particles of coloring pigment and metallic powder pigment form a complex agglomerate phase by compounding to the same pigment phase in a spotted manner in the ink which comprises water soluble organic solvent, water, and polysaccharides.

With such an ink, the liquid separation between the coloring pigment and the metallic powder pigment does not occur even after the ball point pen is used for a long time. Further, pigment particles of both the coloring pigment and the metallic powder pigment gather to the same pigment phase and form the complex agglomerate phase as mentioned above, and the metallic written mark with the color of the coloring pigment can be obtained.

The preferable binding medium for the gathering of the pigment particles that forms the mentioned agglomerate phase or complex agglomerate phase is a water-soluble polymer.

The agglomerate phase or the complex agglomerate phase of the pigment particles in the present invention indicates an agglomeration wherein the pigment particles gather with the effect of, for example, water-soluble polymer as a binding medium between the particles, and not a coagulation wherein the pigment particles coagulate directly.

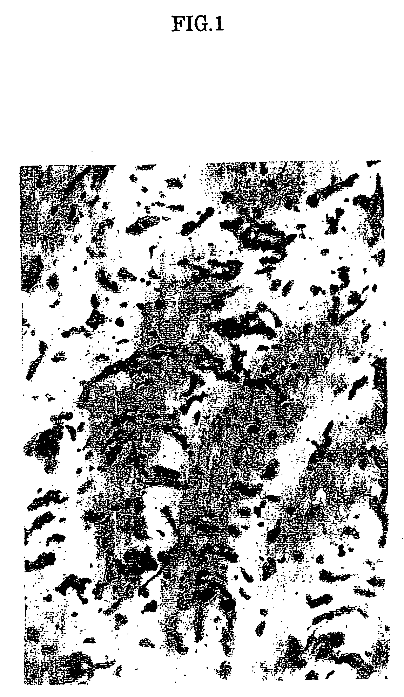

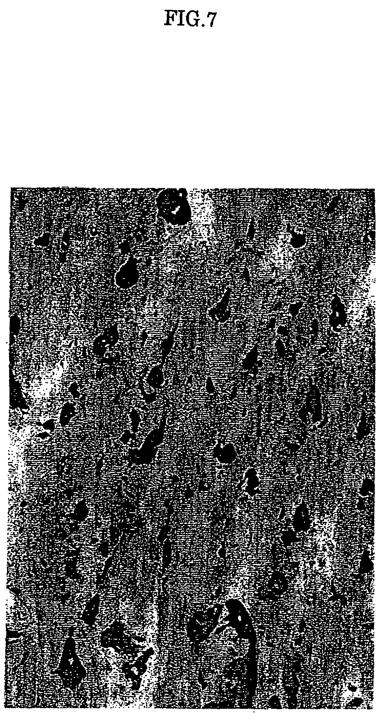

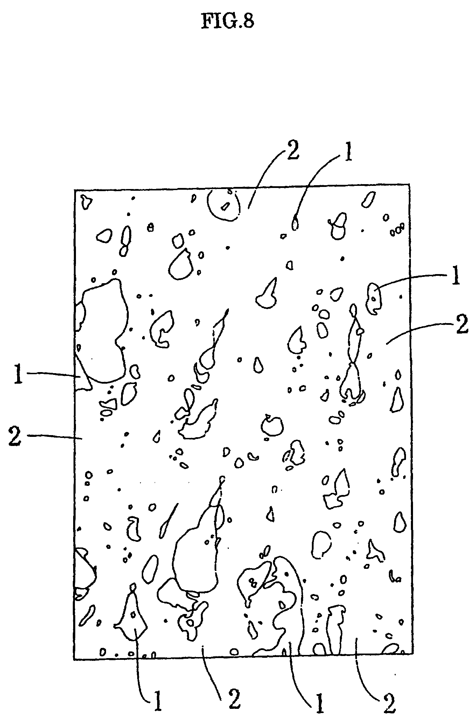

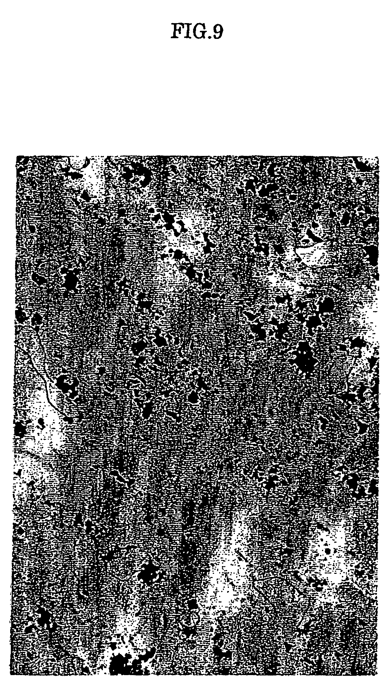

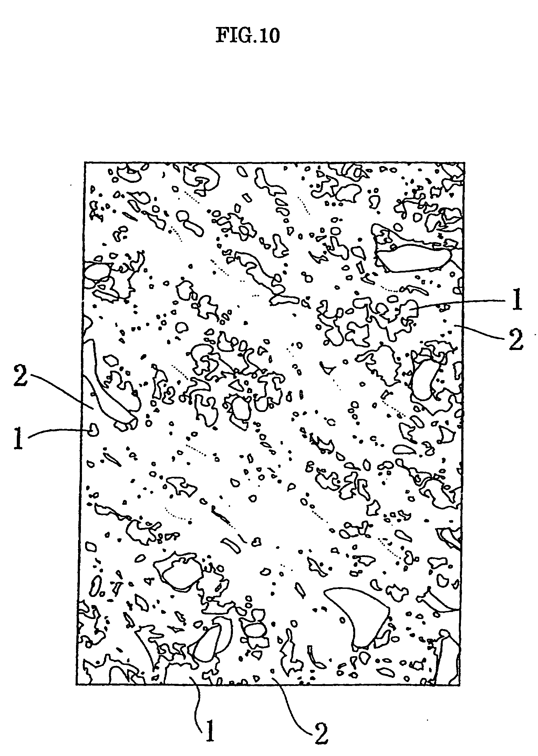

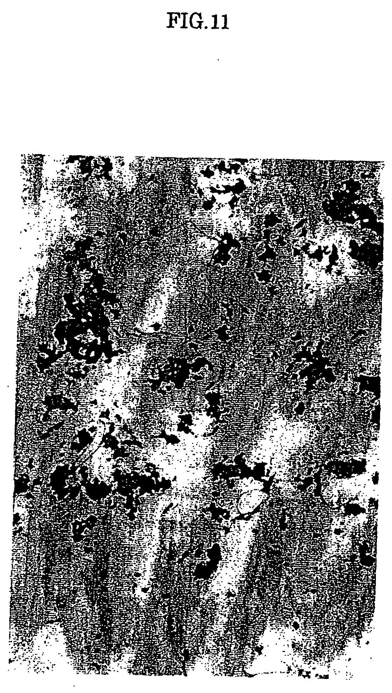

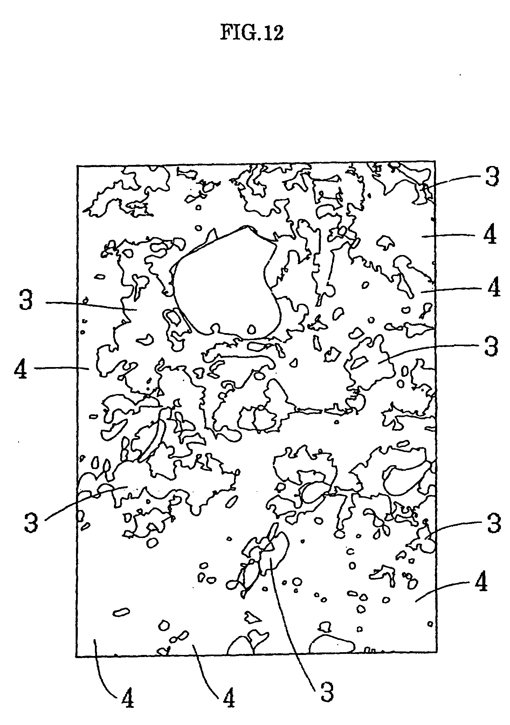

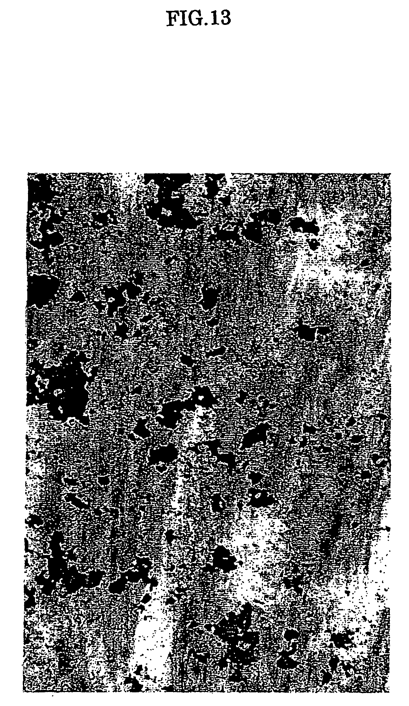

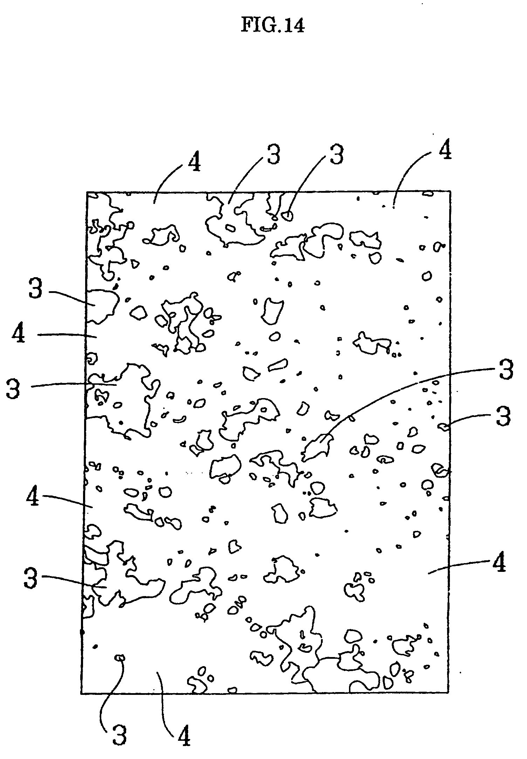

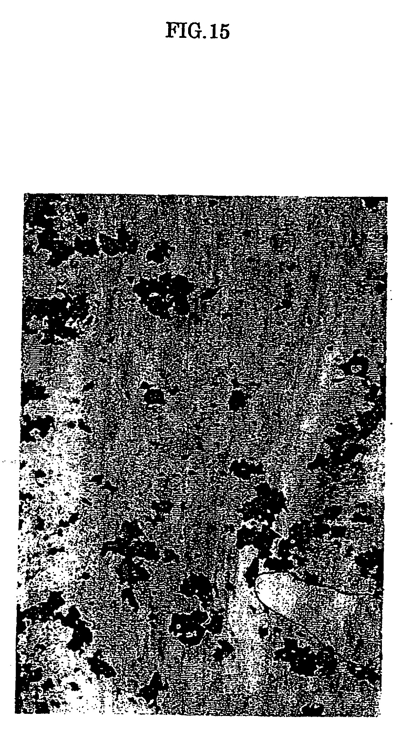

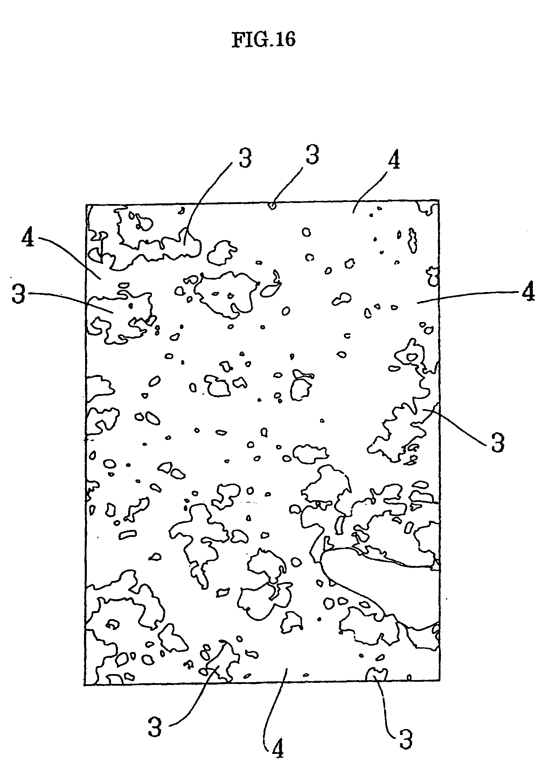

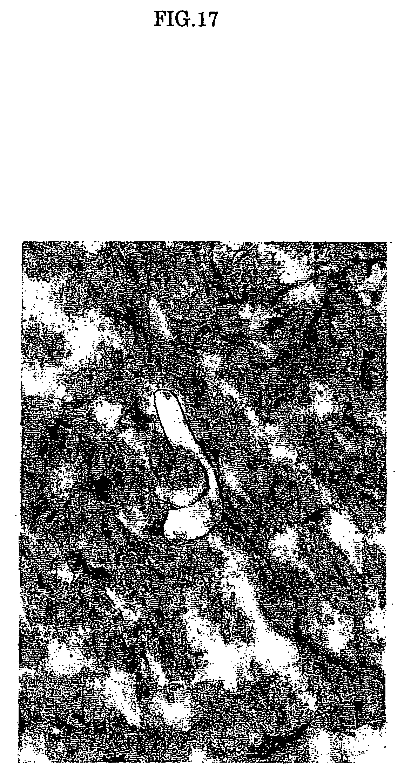

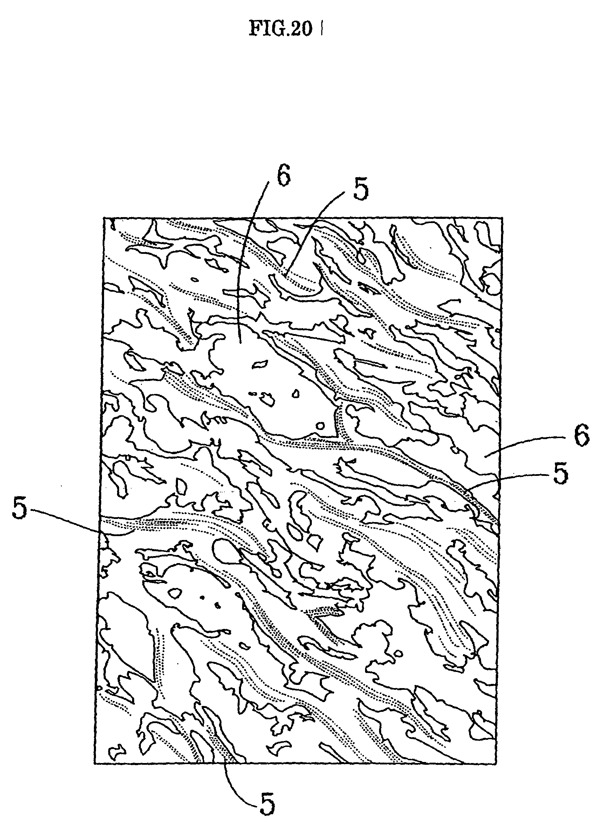

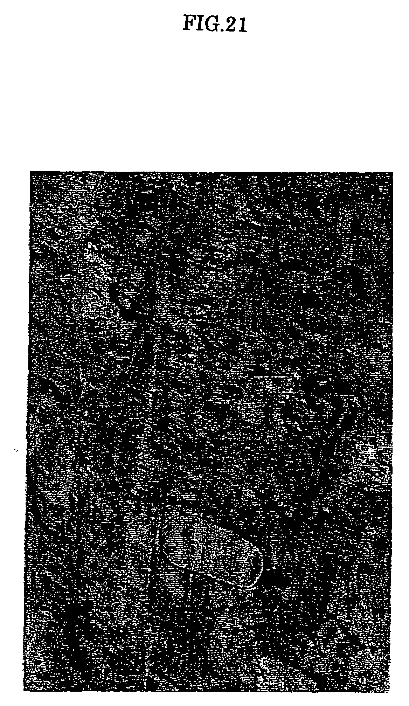

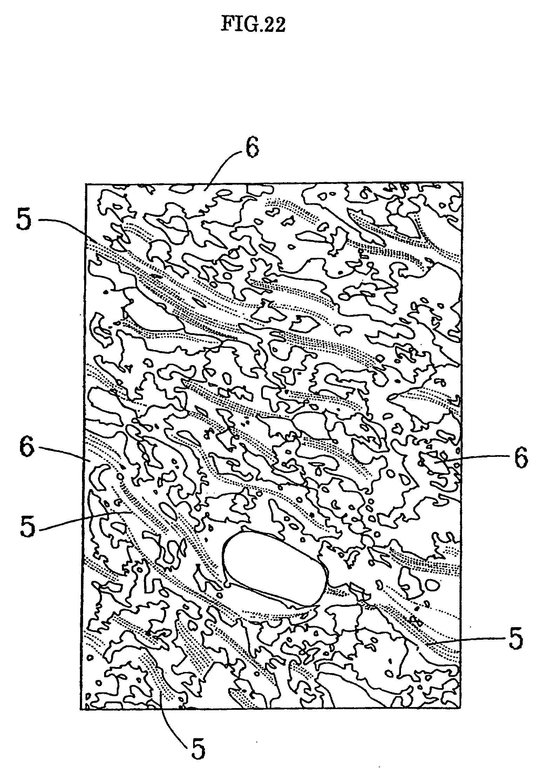

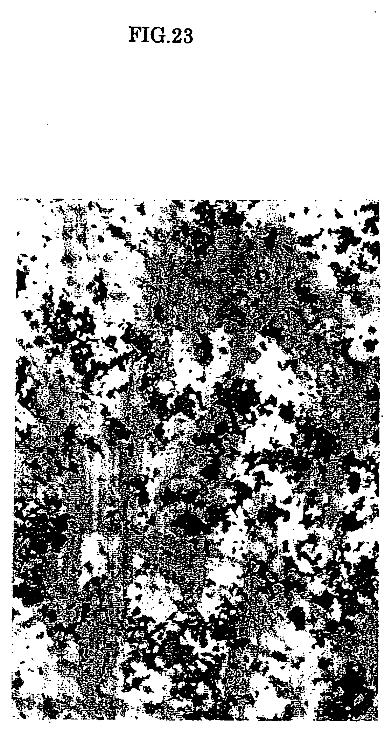

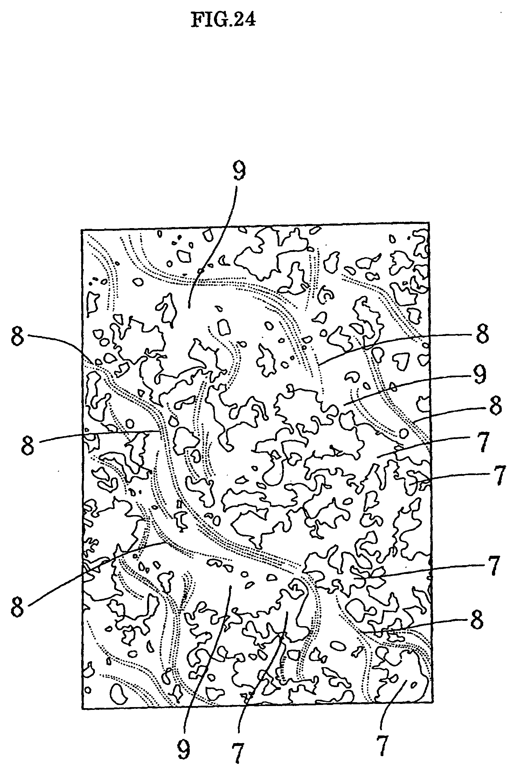

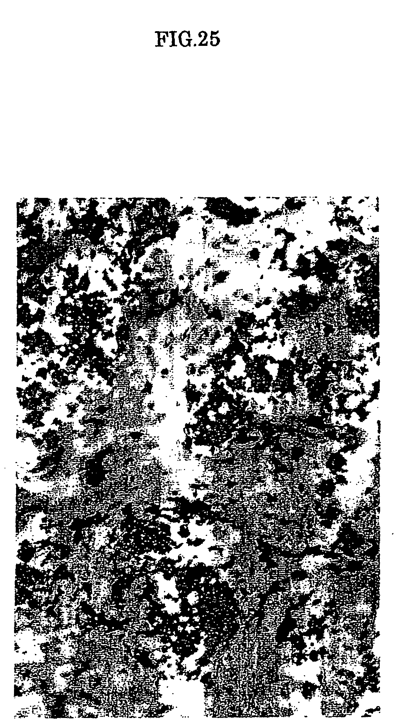

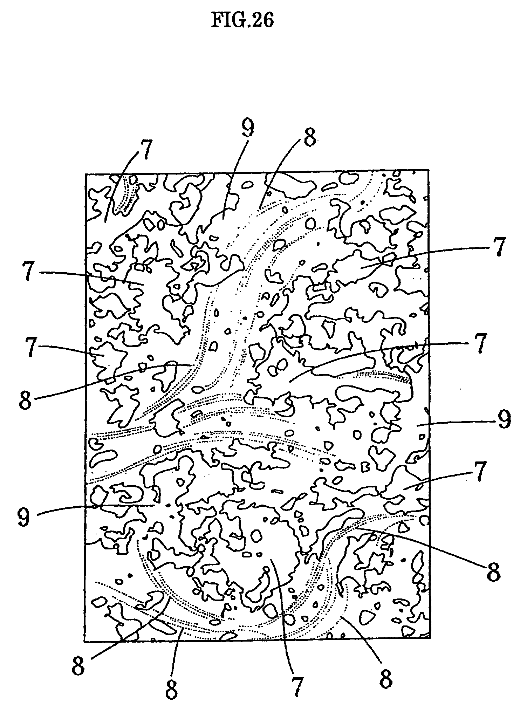

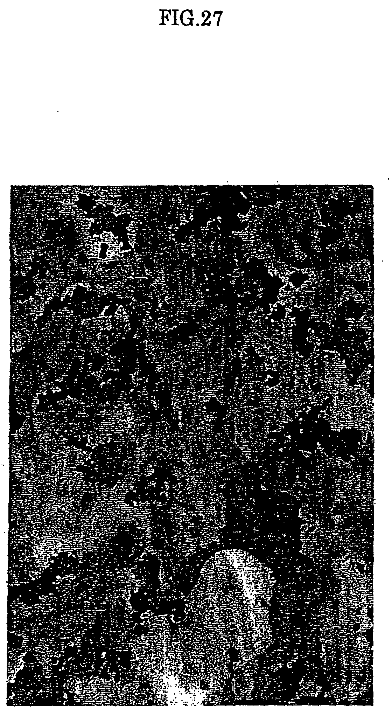

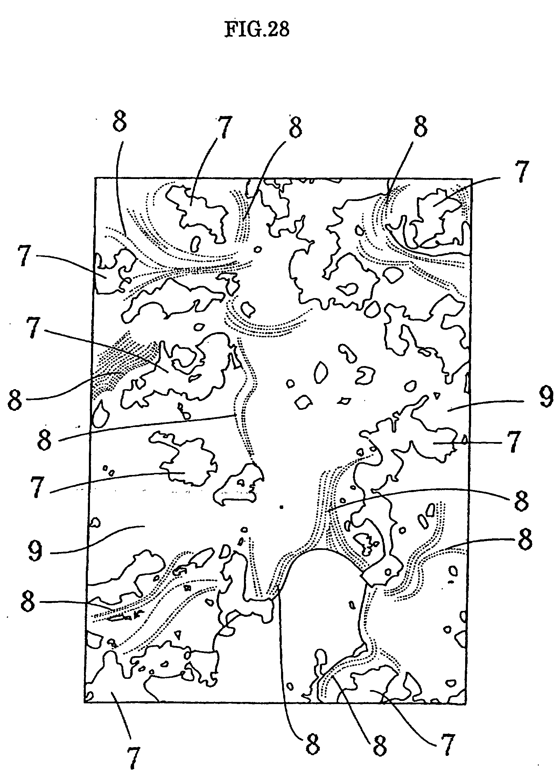

In addition, "spotted" means the state of being scattered and dotted in a spotted manner. It also may include the state wherein those spotted pigment phases are partially connected. That is, "spotted" in the present invention is exemplified by the state of the pigment phase shown in Fig. 1 to Fig. 16 wherein the discontinuous pigment phases are scattered and dotted, and it is distinguished from the state shown in Fig. 17 to Fig. 28 wherein a continuous belt-shaped stream is formed.

### Brief Description of the drawings

FIG. 1 is a photograph substituted for a drawing showing the state of the ink prepared in Example 1, which is taken with a polarizing microscope.
FIG. 2 is a schematic illustration based on FIG. 1, showing the state of the ink.
FIG. 3 is a photograph substituted for a drawing showing the state of the ink prepared in Example 2, which is taken with a polarizing microscope.
FIG. 4 is a schematic illustration based on FIG. 3, showing the state of the ink.
FIG. 5 is a photograph substituted for a drawing showing the state of the ink prepared in Example 3, which is taken with a polarizing microscope.
FIG. 6 is a schematic illustration based on FIG.5, showing the state of the ink.
FIG. 7 is a photograph substituted for a drawing showing the state of the ink prepared in Example 4, which is taken with a polarizing microscope.
FIG. 8 is a schematic illustration based on FIG. 7, showing the state of the ink.
FIG. 9 is a photograph substituted for a drawing showing the state of the ink prepared in Example 5, which is taken with a polarizing microscope.
FIG. 10 is a schematic illustration based on FIG.9, showing the state of the ink.
FIG. 11 is a photograph substituted for a drawing showing the state of the ink prepared in Example 6, which is taken with a polarizing microscope.
FIG. 12 is a schematic illustration based on FIG.11, showing the state of the ink.
FIG. 13 is a photograph substituted for a drawing showing the state of the ink prepared in Example 7, which is taken with a polarizing microscope.
FIG. 14 is a schematic illustration based on FIG. 13, showing the state of the ink.
FIG. 15 is a photograph substituted for a drawing showing the state of the ink prepared in Example 8, which is taken with a polarizing microscope.
FIG. 16 is a schematic illustration based on FIG. 15, showing the state of the ink.
FIG. 17 is a photograph substituted for a drawing showing the state of the ink prepared in Comparative Example 1, which is taken with a polarizing microscope.
FIG. 18 is a schematic illustration based on FIG.17, showing the state of the ink.
FIG. 19 is a photograph substituted for a drawing showing the state of the ink prepared in Comparative Example 2, which is taken with a polarizing microscope.
FIG. 20 is a schematic illustration based on FIG. 19, showing the state of the ink.
FIG. 21 is a photograph substituted for a drawing showing the state of the ink prepared in Comparative Example 3, which is taken with a polarizing microscope.
FIG. 22 is a schematic illustration based on FIG. 21, showing the state of the ink.
FIG. 23 is a photograph substituted for a drawing substituted for drawing showing the state of the ink prepared in Comparative Example 4, which is taken with a polarizing microscope.
FIG. 24 is a schematic illustration based on FIG.23, showing the state of the ink.
FIG. 25 is a photograph substituted for a drawing substituted for drawing showing the state of the ink prepared in Comparative Example 5, which is taken with a polarizing microscope.
FIG. 26 is a schematic illustration based on FIG.25, showing the state of the ink.
FIG.27. is a photograph substituted for a drawing showing the state of the ink prepared in Comparative Example 6, which is taken with a polarizing microscope.
FIG. 28 is a schematic illustration based on FIG. 27, showing the state of the ink.
FIG. 29 is a graphical representation of the relationship between the concentration of CMC (%) and particle diameter of the pigment shown in Table 5.
FIG. 30 is a graphical representation of the relationship between the concentration of pigment dispersant (%) and particle diameter of the pigment shown in Table 6.
FIG. 31 is a representation by a histogram showing the relationship between black intensity (lateral axis) and pixel(vertical axis) related to a water- based ink of Example 1 (FIG.1).
FIG. 32 is a representation by a histogram showing the relationship between black intensity (lateral axis) and pixel(vertical axis) related to a water- based ink of Example 2 (FIG.3).
FIG. 33 is a representation by a histogram showing the relationship between black intensity (lateral axis) and pixel (vertical axis) related to a water- based ink of Comparative Example 1 (FIG.17).
FIG. 34 is a representation by a histogram showing the relationship between black intensity (lateral axis) and pixel(vertical axis) related to a water-based ink of Comparative Example 2 (FIG.19).

### Detailed Description of the preferable embodiments

### (Coloring pigment)

The coloring pigment to be used in the present invention is not particularly limited. For example, inorganic pigments, organic pigments and fluorescent pigments are applicable. More concretely, examples of the coloring pigment include an inorganic pigment such as carbon black and titanium oxide, an organic pigment such as copper-phtalocyanine series, threne-series, azo-series, quinacridone-series, anthroaquinoid-series, dioxazine-series, indigoid-series, thioindigoid-series, perinone-series, perylene-series, indolinone-series, azomethine-series, and a fluorescent pigment. These pigments can be used also as pigment dispersion. Further, dyes (such as direct dyes, acid dyes and basic dyes) and plastic pigments colored by pigment or dye may be used.

The coloring pigment may be used either alone or as a mixture. The amount of the coloring pigment to be used is from 0.05% by weight to 15% by weight and preferably, from 1% by weight to 10% by weight relative to the total amount of the ink composition. When the content of the coloring pigment is less than 0.05% by weight relative to the total amount of the ink composition, the color development lowers. On the other hand, when the content of coloring pigment exceeds 15% by weight, the writing characteristics deteriorates because of the increase of the solid content.

### (Metallic powder pigment)

Both leafing type and non-leafing type metallic powder pigment are applicable to the present invention. For example, a brass powder pigment or an aluminum powder pigment is applicable; and particularly the aluminum powder pigment is preferable to be used. A metallic powder pigment may be used as metallic powder pigment dispersion.

Examples of the aluminum powder pigment include such as "ALPASTE WJP-U75C" (trade name of a product available from Toyo Aluminum Inc.), "ALPASTE WE1200"(trade name of a product available from Toyo Aluminum Inc.) "ALPASTE WXM7675"(trade name of a product available from Toyo Aluminum Inc.) "ALPASTE WXM0630"(trade name of a product available from Toyo Aluminum Inc.) "1110W"(available from Showa Aluminum Inc.) "2172SW"(available from Showa Aluminum Inc.) "AW-808C" (available from Asahi Kasei Inc.) and "AW-7000R" (available from Asahi Kasei Inc.).

Examples of the brass powder pigment include such as "BS-605" (trade name of a product available from Toyo Aluminum Inc.), "BS-607"(trade name of a product available from Toyo Aluminum Inc.), "BRONZE POWDER P-555" (trade name of a product available from Nakajima Metallic Powder Co.,Ltd) and "BRONZE POWDER P-777" (trade name of a product available from Nakajima Metallic Powder Co.,Ltd).

The average particle diameter of the metallic powder pigment (the brass powder pigment and the aluminum powder pigment) is from 5µm to 15µm, preferably. When the average particle diameter of the metallic powder pigment (the brass powder pigment and the aluminum powder pigment) falls within this range, the writing characteristics is excellent.

The metallic powder pigment (the brass powder pigment and the aluminum powder pigment) may be used either alone or as a mixture. The amount of the metallic powder pigment (the brass powder pigment and the aluminum powder pigment) to be used is from 1% by weight to 30% by weight, and preferably, from 2% by weight to 6% by weight relative to the total amount of the ink composition. If the content of the metallic powder pigment, particularly that of the aluminum powder pigment is less than 1% by weight relative to the total amount of the ink composition, metallic luster is not exhibited sufficiently. On the other hand, if the content of the metallic powder pigment, particularly that of the aluminum powder pigment is greater than 30% by weight relative to the total amount of the ink composition, the writing characteristics deteriorates because of the increase of the solid content.

### (Polysaccharide)

The polysaccharide to be used in the present invention is not particularly limited as long as the polysaccharide can adjust the viscosity of the ink. The preferable polysaccharide is one that can provide the ink with the thixotropic characteristics. Examples of the polysaccharide include a microbial polysaccharide or derivatives thereof, a water-soluble vegetable polysaccharide or derivatives thereof, a water-soluble animal polysaccharide or derivatives thereof.

Examples of the microbial polysaccharide or derivatives thereof include pullulan, xanthan gum, welan gum, rhamsan gum, succinoglucan, and dextran.

Examples of the water-soluble vegetable polysaccharide or derivatives thereof include tragacanth gum, guar gum, tara gum, locust bean gum, gade gum, arabinogalactan gum, gum arabic, quince seed gum, pectin, starch, sayrumseed gum, carrageenan, alginic acid and agar. Examples of the water-soluble animal polysaccharide or the derivatives thereof include for example, gelatin and casein.

Preferable natural polysaccharides include the microbial polysaccharides or derivatives thereof, particularly xanthan gum, welan gum, rhamsan gum or succinoglucan.

The polysaccharide may be used either alone or as a mixture. The content of the polysaccharide is, for example, from 0.1% by weight to 2% by weight, and preferably, from 0.15% by weight to 0.5% by weight, relative to the total amount of the ink composition.

### (Water-soluble polymer)

It is important in the present invention that the water-soluble polymer helps the pigment particles to gather and form the spotted agglomerate phase in the ink comprising a water-soluble organic solvent, water and a polysaccharide. Further, in case that the metallic powder pigment, particularly the aluminum powder pigment is used together with the above-mentioned coloring pigment, the water-soluble polymer of the invention should enable both pigments to gather to the same pigment phase and form the complex agglomerate phase which is spotted. Examples of the water-soluble polymer meeting the above-mentioned requirements include a polyethylene glycol and cellulose derivatives. Particularly, the polyethylene glycol whose molecular weight is high is the most preferable.

The number-average molecular weight of the water-soluble polymer meeting these requirements is preferably from 7,000 to 1,100,000. Particularly, the number average molecular weight of the polyethylene glycol is preferably 8,000 to 1,100,000. Examples of the polyethylene glycol include manufactured by Sumitomo Seika Chemicals Company, Limited the trade name of "PEO-1" (manufactured by Sumitomo Seika Chemicals Company, Limited, number-average molecular weight: 150,000 to 400,000), "PEO-3" (number-average molecular weight: 600,000 to 1,100,000) and the like.

Examples of suitable cellulose derivatives to be used include carboxymethyl cellulose or salts thereof, methyl cellulose, hydroxyethyl cellulose, hydroxypropyl cellulose, hydroxypropylmethyl cellulose and hydroxypropylethyl cellulose.

Further, the number-average molecular weight of these cellulose derivatives is preferably 7,000 to 400,000.

The amount of these water-soluble polymers to be used is from 0.1% by weight to 10% by weight, preferably from 0.2% by weight to 4% by weight relative to the total amount of the ink composition. When the content of the water-soluble polymer is less than 0.1% by weight relative to the total amount of the ink composition, the amount of the water-soluble polymer is not enough and the pigment particles of the coloring pigment have difficulty in gathering and forming the agglomerate phase in the ink comprising a water-soluble organic solvent, water and a polysaccharide.

Particularly with the ink comprising a water-soluble organic solvent, water and a polysaccharide, wherein the metallic powder pigment such as the aluminum powder pigment is contained together with the coloring pigment, a phase separation tends to occur with the passage of time between the coloring pigment and the metallic powder pigment. As a result, segregation appears and the written mark will be without metallic tone. On the other hand, when the content of the above-mentioned water-soluble polymer is greater then 10 % by weight relative to the total amount of the ink composition, viscosity of the ink increases and the writing characteristics deteriorates.

### (Water-soluble organic solvent)

The water-soluble organic solvent to be used in the invention is not particularly limited as long as the water-soluble organic solvent can be miscible with water and prevent the drying up of the ink or the freezing at low temperature. Examples of preferable water-soluble organic solvents include alcohol, glycol (for example, ethylene glycol, diethylene glycol, propylene glycol and the like), glycol ethers (for example, ethylene glycol monomethyl ether, and the like), carbitols (for example, diethylene glycol monomethyl ether and the like), glycerin, and trimethylolpropane. The water-soluble organic solvent may be used either alone or as a mixture.

The amount of the water-soluble organic solvent to be used is not specifically limited. For example, the amount is from 1% by weight to 40% by weight, and preferably, from 5% by weight to 20% by weight relative to the total amount of the ink composition. If the content of the water-soluble organic solvent is less than 1% by weight relative to the total amount of the ink composition, the ink dries easily at the pen tip so that clogging occurs and in some cases, writing becomes impossible. On the other hand, if the content is greater than 40% by weight, it takes a long time to dry the ink after writing.

### (Water)

The commonly used water (for example, ion exchange water, distilled water, and the like) can be used in the present invention. The amount of water to be used is not particularly limited and may vary depending on the kind or amount of the other ingredients and the target viscosity of the ink. The amount of water to be used varies in large range, for example from 1% by weight to 80% by weight, and preferably, from 20% by weight to 70% by weight relative to the total amount of the ink composition.

The viscosity of the present ink composition is not particularly limited as long as the composition maintains the suitable viscosity for writing while preventing the aluminum powder pigment or the coloring pigment from precipitation. In the present invention, the viscosity is, for example, preferably within the range between 1,500 and 10,000 cps at 20°C. In addition, the viscosity is measured by the viscometer of ELD type, and under the condition with the cone: 3° R14 cone, the rotation speed: 0.5rpm, and the temperature: 20°C.

For information, to the present aqueous metallic ink of the present invention, conventional additives may be added as required: for example, a corrosion prevention (for example, a benzotriazole, a tolyltriazole, a dicyclohexylammonium nitrite and the like), an antiseptic mildew proofing agent (for example, a benzisothiazoline antiseptic mildew proofing agent, a pentachlorophenol antiseptic mildew proofing agent, a cresol antiseptic mildew proofing agent and the like), a surfactant, a moisturizer, an anti-foam agent, a leveling agent, an anti-agglomerate agent, a pH modifier, a pseudo-plasticity formation agent, and the like.

### (Method for preparation)

The method for preparation of the present ink is not particularly limited, and in order to obtain a water-based ink of the present invention, wherein the pigment particles gather and form the spotted agglomerate phase, the method of introducing the water-soluble polymer into the dispersion of the coloring pigment dispersed in the water and the water-soluble organic solvent, and then adding there to the polysaccharide and the other additives as required can be employed. When the metallic powder pigment is also used, it is preferable that the dispersion of the coloring pigment and the metallic powder pigment dispersed in the water and the water-soluble organic pigment should be prepared beforehand, followed by the introduction of the water-soluble polymer thereto and the polysaccharide and the other additives as required are added and mixed together to obtain an ink. For information, methods for dispersion, degassing, and filtration in the preparation of the ink can be conducted from known methods.

### (EXAMPLES)

Blue pigment dispersion and red pigment dispersion were prepared respectively with the following components.

| (Blue pigment dispersion) | |
|---|---|
| Phtalocyaninblue | 25% by weight |

| (Available from Dainippon Ink and Chemicals, Inc. under the trade name of "FASTGENBLUE BSW") | |
|---|---|
| styrene-acrylic resin | 5% by weight |

| (Available from Johnson Polymer Inc. under the trade name of "JOHNCRYL 679") | |
|---|---|
| propylene glycol | 5% by weight |
| sodium hydroxide | 0.06% by weight |
| ion-exchange water | the rest |

The above-mentioned components were dispersed by bead mill and the resultant mixture was diluted with ion-exchange water to make the content of the pigment be 15% by weight to obtain a blue pigment dispersion whose average particle diameter is 0.10µm.

| (Red pigment dispersion) | |
|---|---|
| naphthol azo red | 25 % by weight |

| (Available from Dainippon Ink and Chemicals, Inc. under the trade name of "SYMULERFASTRED 4127") | |
|---|---|
| styrene-acrylic resin | 5% by weight |

| (Available from Johnson Polymer Inc. under the trade name of "JOHNCRYL 679") | |
|---|---|
| propylene glycol | 5% by weight |
| sodium hydroxide | 0.06% by weight |
| ion-exchange water | the rest |

The above-mentioned components were dispersed by bead mill and the resultant mixture was diluted with ion-exchange water to make the content of the pigment be 15% by weight to obtain a red pigment dispersion whose average particle diameter was 0.15 µm.

### (Examples 1 to 8)

The components shown in the Table 1 (unit: % by weight) were mixed in the above-mentioned manner to prepare each ink.

**Table 1**

| [% by weight] | | | | | | | | |
|---|---|---|---|---|---|---|---|---|
| | EXAMPLES | | | | | | | |
| | 1 | 2 | 3 | 4 | 5 | 6 | 7 | 8 |
| Ion-exchange water | 19.5 | 34.5 | 29.5 | 19.5 | 14.5 | 29.5 | 24.5 | 14.5 |
| Blue pigment dispersion | 35 | 20 | - | - | 35 | 20 | - | - |
| Red pigment dispersion | - | - | 25 | 30 | - | - | 25 | 30 |
| Aluminum powder pigment | - | - | - | - | 5 | 5 | 5 | 5 |
| Polyethylene glycol(10% water solution) | 10 | - | - | 20 | 10 | - | - | 20 |
| Hydroxypropyl celullose (10% water solution) | - | 10 | - | - | - | 10 | - | - |
| Carboxymethyl cellulose (10% water solution) | - | - | 15 | - | - | - | 15 | - |
| Succinoglucan (1% water solution) | 35 | - | 30 | - | 35 | - | 30 | - |
| Rhamsan gum (1% water solution) | - | 35 | - | - | - | 35 | - | - |
| Welan gum (1% water solution) | - | - | - | 30 | - | - | - | 30 |
| Antiseptic mildew proofing agent | 0.5 | 0.5 | 0.5 | 0.5 | 0.5 | 0.5 | 0.5 | 0.5 |
| Notes) | | | | | | | | |
| Aluminum powder pigment: trade name "ALPASTE WXM0630" available from Toyo Aluminum Inc. | | | | | | | | |
| Polyethyleneglycol: trade name "PEO-1" available from Sumitomo Seika Chemicals Company, Limited. (10% water solution) | | | | | | | | |
| Hydroxypropyl cellulose: trade name "HPC-SL" available from Nippon Soda Co., Ltd. (10% water solution) | | | | | | | | |
| Carboxymethyl cellulose: trade name "SELOGEN 6A" available from Dai-ichi Kogyo Seiyaku Co.,Ltd. (10% water solution) | | | | | | | | |
| Succinoglucan: trade name "Rheozan" available from Sansho Co,. Ltd. (1% water solution) | | | | | | | | |
| Welan gum: Trade name "K1C376" available from Sansho Co,. Ltd. (1% water solution) | | | | | | | | |
| Antiseptic mildew proofing agent: (1,2-benzoisothiazoline-3-on): Trade name "PROXEL XL2" available from ZENECA Co,.Ltd. | | | | | | | | |

### (COMPARATIVE EXAMPLE)

The ink of comparative examples 1 to 6 was prepared with the components shown in the following Table 2 in the same manner as in the above-mentioned Examples except adding polyethyleneglycol, hydroxypropyl cellulose and carboxymethyl cellulose.

**Table 2**

| [% by weight] | | | | | | |
|---|---|---|---|---|---|---|
| | COMPARATIVE EXAMPLE | | | | | |
| | 1 | 2 | 3 | 4 | 5 | 6 |
| Ion-exchange water | 34.5 | 44.5 | 34.5 | 29.5 | 39.5 | 29.5 |
| Blue pigment dispersion | 35 | 25 | - | 35 | 25 | - |
| Red pigment dispersion | - | - | 30 | - | - | 30 |
| Aluminum powder pigment | - | - | - | 5 | 5 | 5 |
| Succinoglucan (1% water solution) | 30 | - | - | 30 | - | - |
| Rhamsan gum (1% water solution) | - | 30 | - | - | 30 | - |
| Welan gum (1% water solution) | - | - | 35 | - | - | 35 |
| Antiseptic mildew proofing agent | 0.5 | 0.5 | 0.5 | 0.5 | 0.5 | 0.5 |

### (Evaluation)

The ink of each of the Examples and Comparative Examples was filled in an ink container tube for ball pen including of a polypropylene hollow shaft that had a ball pen tip made of nickel silver(the material of ball: tungsten carbide alloy, the diameter of ball: 0.8mmφ) connected at its edge, and then air bubbles of the ink were removed by centrifuging to obtain test samples of a ball pen.

For information, two days after the preparation of these test samples, the states of the ink of each of the Examples and Comparative Examples were investigated at X200 magnification with a polarizing microscope (specs: available from Nippon Kogaku K.K; trade name:"OPTIHOT XP-M").

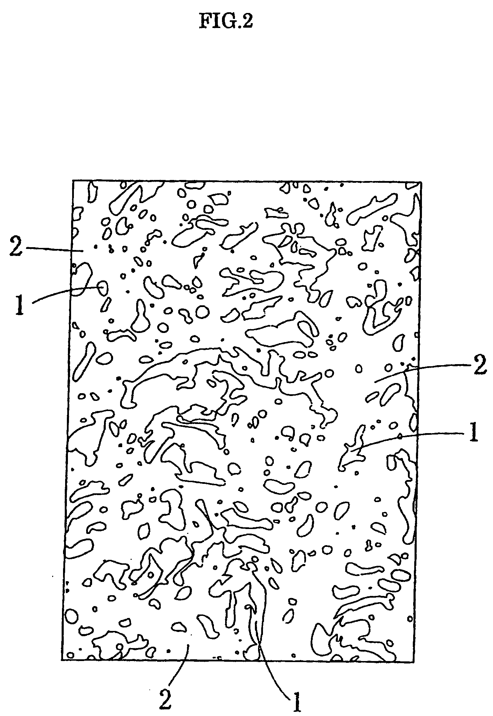

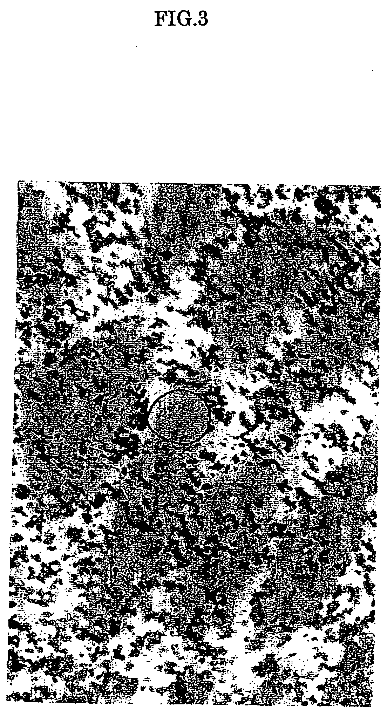

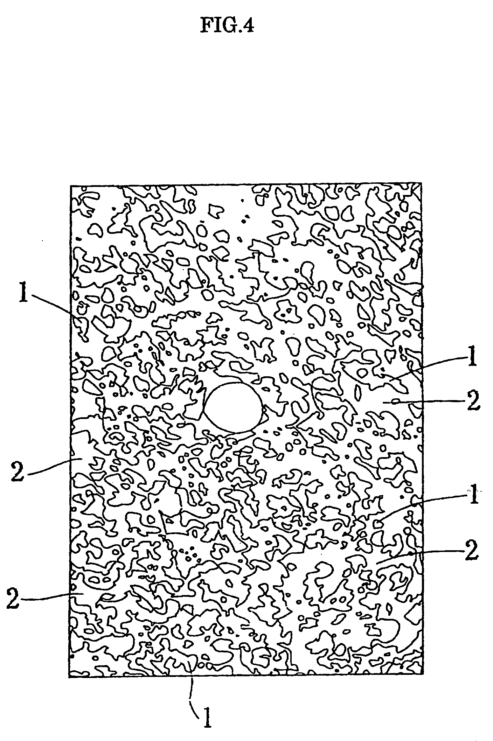

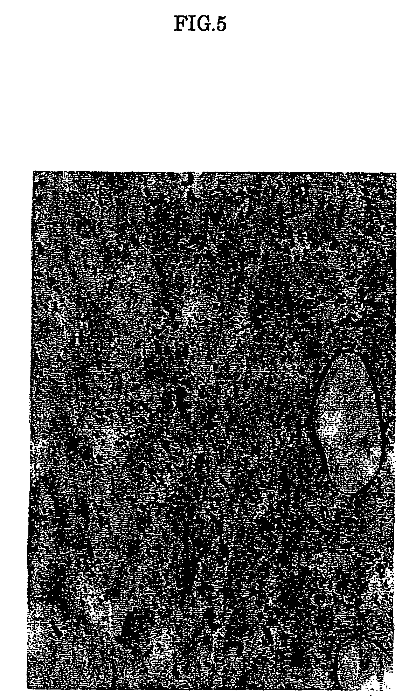

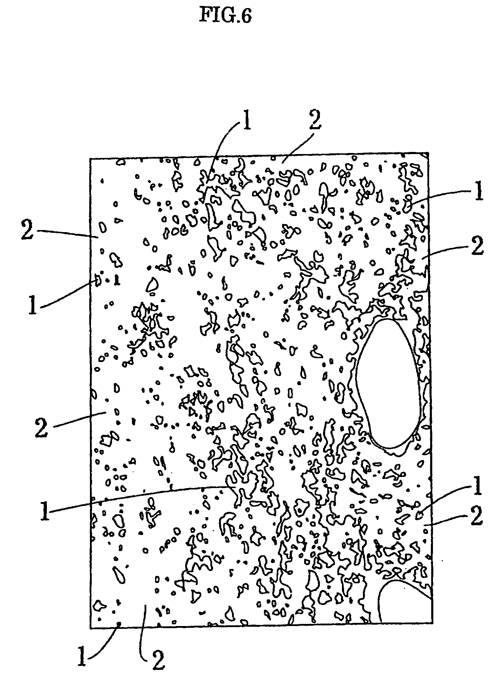

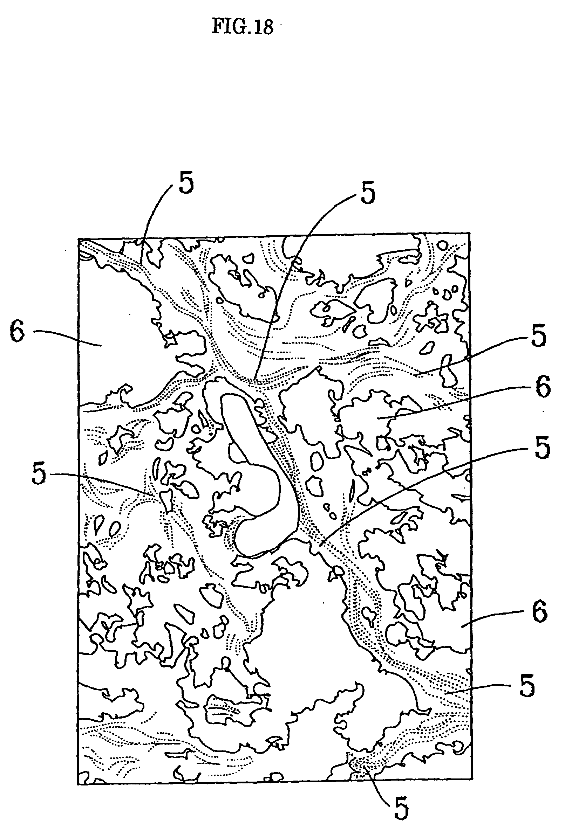

The figure number of "polarization microscope of the state of the ink" shown in the Tables 3 and 4 indicates the figure number of a photograph substituted for a drawing related to the said polarization micrograph taken in each Example and Comparative Example. FIG.2 is a schematic illustration showing the state of the ink based on the micrograph of FIG.1 and FIG.4 is a schematic illustration showing the state of the ink based on the micrograph of FIG.3. Similarly, FIG.6, 8, 10, 12, 14 and 16 are schematic illustrations showing the state of the ink based on the micrograph of Examples shown as FIG.5, 7, 9, 11, 13 and 15 respectively. FIG.18, 20, 22, 24, 26 and 28 are schematic illustrations showing the state of the ink based on the micrograph of Comparative Examples shown as FIG.17, 19, 21, 23, 25 and 27 respectively.

In those schematic illustrations which were drawn based on the micrographs, 1 is a spotted agglomerate phase (pigment phase) wherein the pigment particles gather in a spotted manner, 2 is a phase comprising polysaccharide (vehicle phase), 3 is a complex agglomerate phase wherein pigment particles of a coloring pigment and those of a metallic powder pigment gather and form the same spotted pigment phase, 4 is a phase comprising polysaccharide (vehicle phase), 5 is a pigment phase that forms a belt-shaped stream (separated pigment phase), 6 is a phase comprising polysaccharide (vehicle phase), 7 is a pigment phase of a metallic powder pigment, 8 is a belt-shaped pigment phase of the coloring pigment that is flowing between the pigment phases 7, and 9 is a phase comprising polysaccharide (vehicle phase).

In the test of the stability to storage, those test samples were all allowed to stand with the pen tip oriented downward. First, their state was evaluated before the test and then, after they were stored for one week at 50°C, their stability to storage was evaluated. The other samples were stored for one year at a room temperature and then evaluated for their stability to storage. The results of the evaluation of each Example and Comparative Example are shown in Tables 3 and 4.

**Table 3**

| | Polarizing micrograph showing the state of ink | Before the test | After 1 week at 50°C | After 1 year at room temperature | | | |
|---|---|---|---|---|---|---|---|
| | | Writtenmark | Writtenmark | Writtenmark | Ink flow | appearance | Ink leakage |
| Ex.1 | Agglomerate phase of colored pigment (Fig.1) | Blue | Blue | Blue | Same as before the test | No change | No |
| Ex.2 | Agglomerate phase of colored pigment (Fig.3) | Blue | Blue | Blue | Same as before the test | No change | No |
| Ex.3 | Agglomerate phase of colored pigment (Fig.5) | Red | Red | Red | Same as before the test | No change | No |
| Ex.4 | Agglomerate phase of colored pigment (Fig.7) | Red | Red | Red | Same as before the test | No change | No |
| Ex.5 | Complex agglomerate phase of colored pigment and metallic powder pigment (Fig.9) | Blue with metallic luster | Blue with metallic luster | Blue with metallic luster | Same as before the test | No change | No |
| Ex.6 | Complex agglomerate phase of colored pigment and metallic powder pigment (Fig.11) | Blue with metallic luster | Blue with metallic luster | Blue with metallic luster | Same as before the test | No change | No |
| Ex.7 | Complex agglomerate phase of colored pigment and metallic powder pigment (Fig.13) | Red with metallic luster | Red with metallic luster | Red with metallic luster | Same as before the test | No change | No |
| Ex.8 | Complex agglomerate phase of colored pigment and metallic powder pigment (Fig.15) | Red with metallic luster | Red with metallic luster | Red with metallic luster | Same as before the test | No change | No |

**Table 4**

| | Polarizing micrograph showing the state of ink | Before the test | After 1 week at 50°C | After 1 year at room temperature | | | |
|---|---|---|---|---|---|---|---|
| | | Writtenmark | Writtenmark | Writtenmark | Ink flow | Appearance | Ink leakage |
| Com. Ex.1 | Fig.17 | Blue | Dark blue | Dark blue | Excess ink flow | No change | Yes |
| Com. Ex.2 | Fig.19 | Blue | Blue | Dark blue | Excess ink flow | No change | Yes |
| Com. Ex.3 | Fig.21 | Red | Red | Dark red | Excess ink flow | No change | Yes |
| Com. Ex.4 | Fig.23 | Blue with metallic luster | Dark blue with no metallic luster | Dark blue with no metallic luster | Excess ink flow | Separation of colorant | Yes |
| Com. Ex.5 | Fig.25 | Blue with metallic luster | Blue with metallic luster | Dark blue with no metallic luster | Excess ink flow | Separation of colorant | Yes |
| Com. Ex.6 | Fig.27 | Red with metallic luster | Red with metallic luster | Dark red with no metallic luster | Excess ink flow | Separation of colorant | Yes |

As can be understood from the mentioned micrograph, in the ink of Examples 1-4, pigment particles of the coloring pigment gather and form a spotted agglomerate phase and the mentioned spotted agglomerate phase forms a pigment phase.

On the other hand, every of the ink of Comparative Examples 1-3 has a belt-shaped pigment phase as shown in the above mentioned micrograph. Comparing the ink of Examples 1-4 with those of Comparative Examples 1-3 before the test, their "written marks" show the same color. On the other hand, the "written mark" after 1 week of storage at 50°C, when further followed, exhibit dark blue color in Comparative Example 1 and the change of color is observed. Further, after 1 year of storage at room temperature, the inks of Examples 1-4 don't show any change regarding "written mark" nor "ink flow" from the pen tip of the ball point pen. There is no change in their outward "appearance" and no leakage of ink. On the other hand, the inks of Comparative Examples 1-3 changed their color to dark blue or dark red and caused ink leakage while showing no large change of appearance.

When the inks of Examples 5 to 8 with aluminum powder pigment compounded are compared with those inks of Comparative Examples 4-6, in the inks of Comparative Examples, according to the above mentioned micrographs, the pigment particles of the aluminum powder pigment are dispersed inhomogeneously, forming the agglomerate phase independent from the belt-shaped stream of the coloring pigment. On the other hand, with the inks of Examples 5-8, there is no belt-shaped stream of the coloring pigment as can be seen in the above-mentioned Comparative Examples and the pigment phase containing the agglomerate phase of the aluminum powder pigment is colored blue or red by the coloring pigment, that is, the pigment phase has the complex agglomerate phase wherein the agglomerate of the coloring pigment particles combine with the agglomerate of the aluminum powder pigment particles.

As can be understood from Tables 3 and 4, every of the Examples 5-8 exhibits color with metallic luster and uniform written mark before the test when the ink of this Examples 5-8 and the ink of the Comparative Examples 4-6 are compared. When compared, every of the Comparative Examples 4-6 exhibits color with a metallic luster, too. On the other hand, although the inks of the Examples 5-8 after 1 week of storage at 50 °C maintain the metallic luster as before the test, the ink of Comparative Example 4 has changed its color to the dark blue with no metallic luster while those of Comparative Examples 5 and 6 maintain the same color with metallic luster. After 1 year of storage at room temperature, the inks of Examples 5-8 do not exhibit any change of "written mark" and "ink flow" from the pen tip of the ball point pen compared to their state before the storage, and there is no change in outward appearance and no leakage of ink. On the other hand, the ink of Comparative Examples 4-6 changed to the ink with dark blue or dark red color without metallic luster and exhibited an excess ink flow out of the pen tip after 1 year of storage at room temperature. The outward appearance deteriorates because the low viscosity component with condensed color containing an excessive amount of the coloring pigment separates from the high viscosity component containing excessive amount of the aluminum pigment. Moreover, the Comparative Examples 4-6 after 1 year of storage at room temperature cause the leakage of the ink.

Considering the above-mentioned results, it can be understood that the stability against long-term storage of the ink is significantly affected by the forming state or gathering state of the coloring pigment phase. That is, in case of the ink wherein the pigment particles of the coloring pigment gather to form a spotted agglomerate phase and the pigment phase includes this agglomerate phase, as mentioned above, the color of the written mark is stable and there occurs no problem in the ink flow, outward appearance, and the leakage of ink. On the other hand, it is assumed that the ink of the Comparative Examples wherein the coloring pigment forms the inhomogeneous belt-shaped phase (pigment phase) causes the segregation to appear in the written mark because of this inhomogeneous belt-shaped phase. Further, the inhomogeneous belt-shaped phase develops during the long-term storage and the low viscosity component containing the excess amount of the coloring pigment separates more and more, and then, after 1 year of storage at room temperature, the ink exhibits a dark blue or dark red color, showing excess ink flow and ink leakage.

In the case of the ink containing aluminum powder pigment, the stability against long-term storage is significantly affected by the forming state or gathering state of the coloring pigment phase as well. That is, with the ink wherein the pigment particles of both the coloring pigment and the metallic powder pigment gather to the same pigment phase and form the complex agglomerate phase, as mentioned above, the written mark exhibits the color of the ink or the color with metallic luster, there occurs no problem in the ink flow, the outward appearance, and the ink leakage. On the other hand, in the case of the ink of the Comparative Examples wherein the coloring pigment forms the inhomogeneous belt-shaped phase (pigment phase) separately from the aggregation of the aluminum powder pigment, the segregation occurs because of the inhomogeneous belt-shaped phase of the coloring pigment. This inhomogeneous belt-shaped phase of the coloring pigment develops during long-term storage and the low viscosity component containing the excess amount of the coloring pigment separates more and more from the high viscosity component containing the aluminum powder pigment. Therefore, after 1 year of storage at room temperature, the ink exhibits dark blue or dark red which is the color of this low viscosity component containing excess amount of the coloring pigment, excess ink flow and ink leakage.

From the Examples and Comparative Examples discussed above, the above-mentioned phenomenon can be considered to be a common to all polysaccharides such as succinoglucan, rhamsan gum and welan gum. Particularly, the Comparative Examples 1 and 4 containing succinoglucan show more tendency to form the low viscosity component containing the excess amount of the coloring pigment compared to the other ink containing rhamsan gum or welan gum. On the other hand, though succinoglucan is included, as seen in Examples 1, 3, 5 and 7, pigment particles of the coloring pigment form the spotted agglomerate phase or the complex agglomerate phase with the agglomerate phase of the aluminum powder pigment, thereby capable of restraining the tendency to separation of the low viscosity component containing excess amount of a coloring pigment and ensuring the stability against long-term storage.

The average particle diameter of the agglomerate phase formed in Examples 1-4 is 0.5 µm to 10 µm as an actual measurement based on the micrograph.

However, with the ink of Examples 1-4 diluted by 10 times their volume of the ion-exchange water, its average particle diameter is about 0.1 µm when measured by photo correlation spectroscopy. From the above-mentioned facts, the agglomerate phase formed by the pigment particles in the Examples 1-4 is not a coagulation of each pigment particle but an agglomeration wherein the pigment particles are connected by such a weak bond as it can be dissociated by diluting with ion-exchange water. This phenomenon can also commonly be seen in the general polysaccharides such as succinoglucan, rhamsan gum and welan gum.

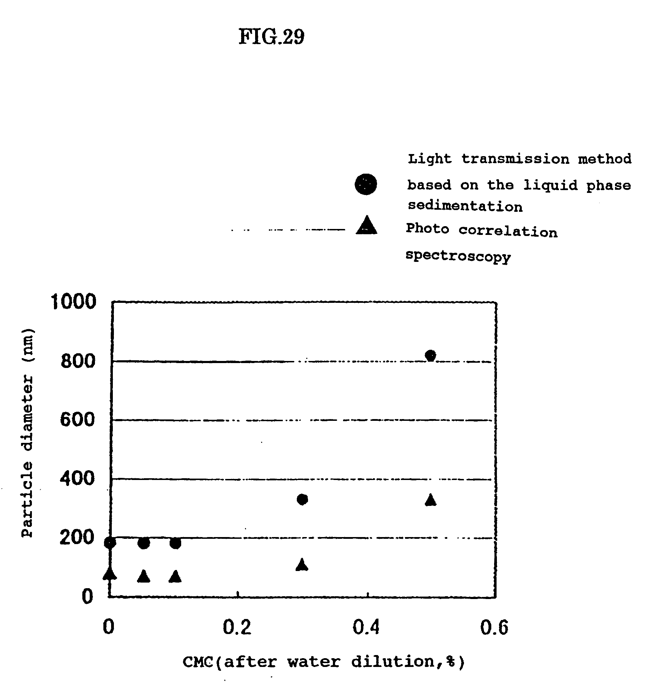

To prove the mentioned facts more clearly, the inks of Examples 9-12 and Comparative Example 7 are prepared with the components shown in the following Table 5. Each of these inks is diluted by ten times their volume with water and these diluted ink are investigated and their pigment particle diameter are measured by photo correlation spectroscopy (utilizing trade name: "LPA3000/3100" available from Otsuka Electronics Co., Ltd.) and by light transmission method based on the liquid phase sedimentation (utilizing trade name: "CAPA-700" available from Horiba, Ltd). Fig. 29 is a graph representation based on the result of the measurements shown in Table 5 and illustrates the relationship between the concentration of carboxy methyl cellulose (CMC) (%) after water dilution and the pigment particle diameter.

**Table 5**

| [% by weight] | | | | | | |
|---|---|---|---|---|---|---|
| | | Example | | | | Com.Ex. |
| | | 9 | 10 | 11 | 12 | 7 |
| Blue pigment dispersion solution | | 20 | 20 | 20 | 20 | 20 |
| Carboxymethyl cellulose (10% water solution) | | 50 | 30 | 10 | 5 | - |
| Succinoglucan (1% water solution) | | 20 | 20 | 20 | 20 | 20 |
| Ion-exchange water | | Rest | Rest | Rest | Rest | Rest |
| Pigment particle diameter (µm) | Light transmission method based on the liquid phase sedimentation | 0.82 | 0.33 | 0.18 | 0.18 | 0.18 |
| | Photo correlation spectroscopy | 0.33 | 0.11 | 0.07 | 0.07 | 0.08 |
| Note) The pigment particle diameter is measured in the dilution of the ink of Examples and Comparative Examples diluted by ten times their volume with water. | | | | | | |

As can be understood from the Table 5 and Fig. 29, the pigment particle diameter increases with the concentration of CMC. When Examples 11 and 12, wherein the concentration of CMC is low, are diluted by ten times their volume of ion-exchange water, the particle diameter of the pigment particles becomes quite low and almost the same as that of Comparative Example 7, which does not contain any CMC. From the results stated above, the particle diameter increases with the concentration of CMC and considered with the result by the mentioned micrograph, it can be understood that the pigment particles form the pigment phase as the agglomeration in which pigment particles gather in the ink of each Example.

Next, the inks of Examples 9, 13 and 14 are prepared with the components shown in the following Table 6. Each of the ink is diluted by ten times their volume with ion-exchange water and the particle diameter of the pigment particles in these dilutions is measured by photo correlation spectroscopy(utilizing trade name: "LPA3000/3100" available from Otsuka Electronics Co., Ltd).

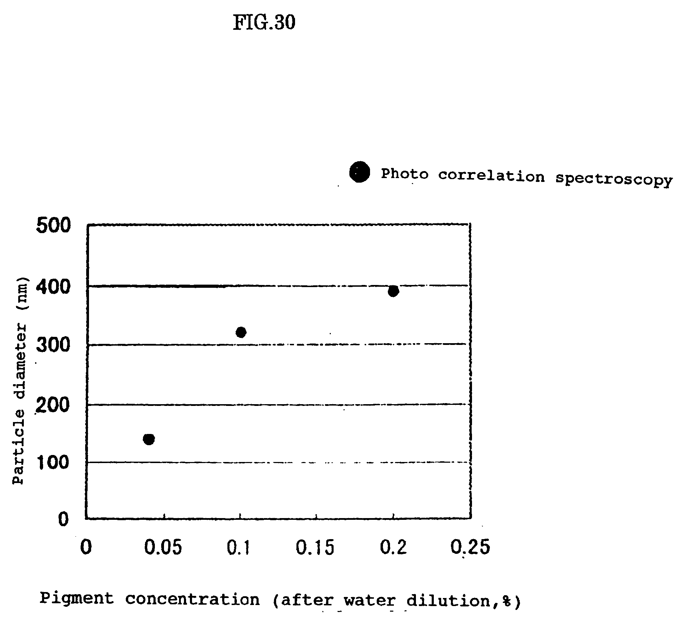

Fig. 30 is a graph representation plotting the result of measurements shown in Table 6 and illustrates the relationship between the concentration of the diluted pigment dispersion (%) with water and the pigment particle diameter.

**Table 6**

| [% by weight] | | | | |
|---|---|---|---|---|
| | | Example | | |
| | | 9 | 13 | 14 |
| Blue pigment dispersion solution | | 20 | 10 | 0.4 |
| Carboxymethyl cellulose (10% water solution) | | 50 | 50 | 50 |
| Succinoglucan (1% water solution) | | 20 | 20 | 20 |
| Ion-exchange water | | Rest | Rest | Rest |
| Pigment particle diameter (µm) | Photo correlation spectroscopy | 0.39 | 0.32 | 0.14 |
| Note) The pigment particle diameter is measured in the dilution of the ink prepared in Examples diluted by ten times their volume with water. | | | | |

As can be understood from Table 6 and Fig.30, the diameter of the pigment particle increases with the concentration of the pigment in the ink. From these facts, it can be understood that the pigment particle diameter gets big with the pigment concentration in the ink and that when comparing the results by the micrograph, the pigment particles of the ink prepared in each Example form the pigment phase as the agglomeration which gather in a state of agglomeration.

Tables 5 and 6 show the change of pigment particle diameter when the CMC is included as a water-soluble polymer. However, when the polyethylene glycol is included as a water-soluble polymer, similar tendency has been shown. For information, each component shown in Tables 5 and 6 is the same as those used in Example 1.

From the results shown in Tables 5 and 6, it is assumed that in the ink of the present invention containing a water-soluble organic solvent, water and a polysaccharide, the water-soluble polymer acts as a binding medium on the pigment particles which form the agglomerate phase. The particles do not coagulate firmly however, they form a kind of agglomeration. This agglomeration of the pigment particles forms the pigment phase and therefore, the stability against long-term storage of ink can be obtained. Such an effect can be exhibited regardless of the kind of polysaccharide such as rhamsan gum, welan gum and succinoglucan.

### (Measurement of agglomeration level in numerical terms)

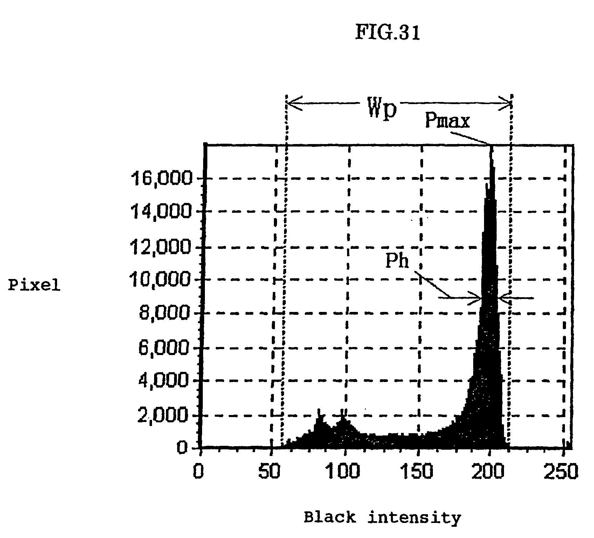

Next, concerning each water-based ink in Examples 1 and 2, and Comparative Examples 1 and 2, image digital data processing was applied to the polarizing micrograph thereof(Figs 1,3,17,and 19) by using a computer.
The image was scanned to a computer (OS: Windows 95) using a scanner (manufactured by Cannon Inc., trade name "Cano Scan 600" , resolution: color 150 dpi) with a soft ware manufactured by Cannon Inc. trade name "Scan Craft CS VERSION 3-0-1". Next, by using a software manufactured by Horie-MS with a trade name of "Image Plus 2", converting this into a gray scale with 0 to 255, thereby making an image with a gradation of gray 256, which is represented by a histogram whose horizontal axis is represented by a black intensity (the degree of white and black, or black level)and the vertical axis is represented by pixel (picture element). Fig 31 is a histogram representing the relationship of a black intensity (horizontal axis) and pixel (vertical axis) on a water- based ink of the Example 1 (Fig. 1).

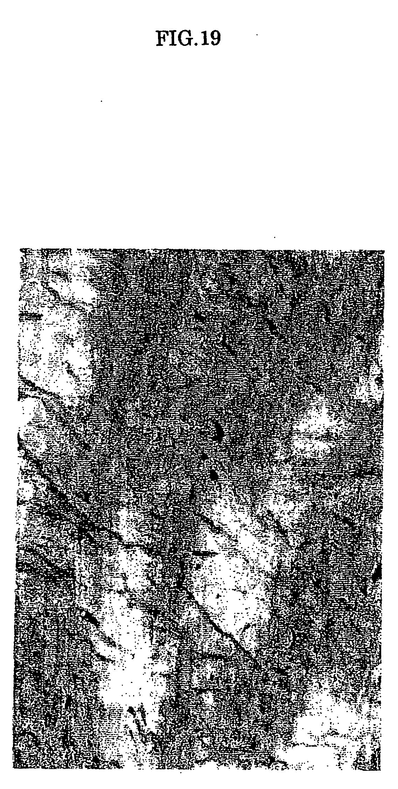

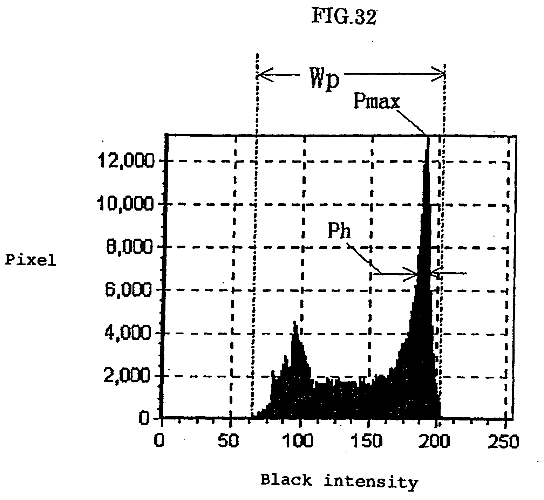

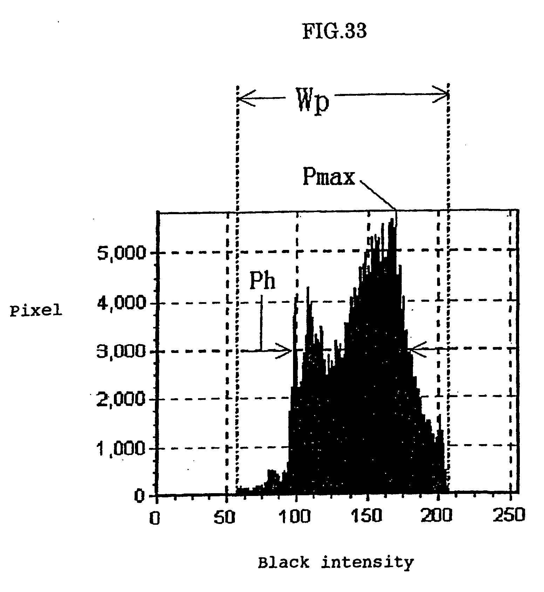

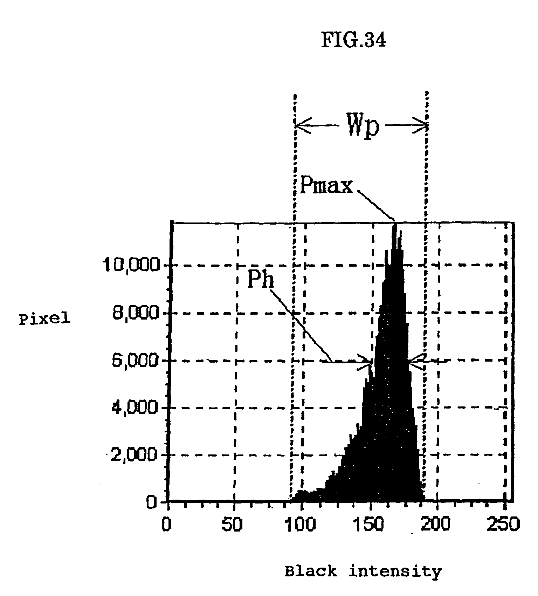

Fig 32 is a histogram representing the relationship of a black intensity (horizontal axis) and pixel (vertical axis) on a water-based ink of the Example 2 (Fig. 3). Fig 33 is a histogram representing the relationship of a black intensity (horizontal axis) and pixel (vertical axis) on a water- based ink of the Comparative Example 1 (Fig. 17). Fig 34 is a histogram representing the relationship of a black intensity (horizontal axis) and pixel (vertical axis) on a water- based ink of the Comparative Example 2 (Fig. 19).
The degree of non-agglomeration to agglomeration is represented by a scale of the black intensity and the pixel thereof, and it shows that the larger the black intensity (black level) of the maximum peak position and the larger the pixel number, the larger the degree of the agglomeration. Further, it shows that the narrower the half bandwidth of the maximum peak position, the larger the degree of the agglomeration, showing that substantially the same dotted agglomeration is formed.
Next, in order to digitalize the degree of preferable agglomeration or the pigment particles, each of the said histogram was analyzed and digitalized, and was transmitted to data with spread sheet software (trade name "EXCEL" manufactured by Microsoft Corporation) and the value was obtained as shown in Table 7.

**Table 7**

| | Example 1 (Fig.1) | Example 2 (Fig.3) | Comparative Example 1 (Fig.17) | Comparative Example 2 (Fig.19) |
|---|---|---|---|---|
| Histogram Fig | Fig.31 | Fig.32 | Fig.33 | Fig.34 |
| Total pixel of Histogram (TP) | 388066 | 384874 | 383541 | 383541 |
| Peak width Wₚ | 155 | 138 | 149 | 98 |
| Minimum value Wₘᵢₙ | 58 | 66 | 57 | 93 |
| Maximum value Wₘₐₓ | 212 | 204 | 206 | 190 |
| Maximum peak position Pₘₐₓ | 199 | 190 | 170 | 167 |
| Relative peak position Pᵣ | 0.91 | 0.90 | 0.76 | 0.76 |
| Half bandwidth Pₕ | 9 | 10 | 49 | 15 |
| Half bandwidth Ph/Peak bandwidth Wᵣ | 0.06 | 0.07 | 0.33 | 0.15 |

For information, in Table 7, peak width Wp is represented by a width of dots which have the intensity of not less than 0.03% of the total of all the pixel numbers of the histogram. In Table 7, minimum value Wmin is represented by the minimum value of the peak width Wp (black intensity value) and maximum value Wmax is represented by the maximum value of the peak width Wp (black intensity value). In Table 7, maximum peak position Pmax is represented by the value of black intensity at the maximum peak of histogram and in Table 7, relative peak position Pr is represented by the exponent value of the maximum peak position, Pmax when peak width Wp is set 1. In Table 7, the half bandwidth Ph is represented by the scanned peak width (width of black intensity) of half of the intensity of the maximum peak. In Table 7, Wr (half bandwidth Ph/Peak bandwidth Wp) is represented by the ratio of the half bandwidth Ph to the peak width, Wp and the peak of the intensity of half of the maximum peak is represented by a relative value. In the figs 31 to 34, Wp, Pmax, and Ph show the peak width, maximum peak position, and half bandwidth, respectively as stated above.

From these results, when the ink is the water-based ink which comprises the coloring pigment particle having the agglomerated phase (agglomerated phase of the pigment particles formed by gathering in a spotted manner) of the histogram distribution in which the relative Pr value of black color intensity (black intensity) represented by image processing and conversion by a gray scale of an agglomerate phase of colored pigment particles is not less than 0.8 and preferably not less than 0.89, and most preferably not less than 0.90 and Wr value(half bandwidth Ph/peak bandwidth Wp) is not more than 0.1, preferably not more than 0.09, and most preferably not more than 0.07, as stated above, a water-based ink for ball pen with a maintenance stability for a long period of time can be provided.

In the present invention, since pigment particles of said coloring pigment gather to form a spotted agglomerate phase in a water- based ink comprising a coloring pigment, a water-soluble organic solvent, water and a polysaccharide, it can inhibit the separation of the coloring pigments in the ink even for a long time use, thereby capable of providing a written mark with a stable color. Further, since the generation of ink leakage and excess flow of an ink can be inhibited, it is a water- based ink excellent in maintenance stability for a long period of time.

Moreover, particularly in the case of a water-based ink in which both pigment particles of coloring pigment and metallic powder pigment form a complex agglomerate phase by compounding to the same pigment phase in the ink which comprises water soluble organic solvent, water, and polysaccharides, it can inhibit the separation of the coloring pigments and the separation between the coloring pigment and metallic powder pigment in the ink even for a long time use, inhibiting the separation of a writing lines, capable of obtaining a written mark of metallic luster with a stable color, and inhibiting the generation of ink leakage and excess flow of the ink , thereby capable of providing a water-based ink for ball pen excellent in maintenance stability.

### Industrial Applicability

As stated above, the water-based ink related to the present invention is useful as a water-based ink for ball pen.

## Claims

1. A water- based ink for ball pen comprising a water-soluble organic solvent, water and a polysaccharide, wherein pigment particles of a coloring pigment gather and form a dotted agglomerate phase.

2. A water- based ink for ball pen comprising a water-soluble organic solvent, water and a polysaccharide, wherein pigment particles of both a coloring pigment and a metallic powder pigment gather in same pigment phase and form a dotted complex agglomerate phase.

3. A water-based ink for ball pen as set forth in claim 1 or 2, wherein the pigment particles forming the agglomerate phase or complex agglomerate phase gather with a water-soluble polymer as a binding medium.

4. A water-based ink for ball pen as set forth in claim 1 to 3, wherein the polysaccharide is at least one compound selected from the group consisting of rhamsan gum, welan gum, xanthan gum and succinoglucan.

5. A water-based ink for ball pen as set forth in claim 3, wherein the water-soluble polymer is a polyethylene glycol.

6. A water-based ink for ball pen as set forth in claim 5, wherein the number average molecular weight of the polyethylene glycol is 8,000 to 1,100,000.

7. A water-based ink for ball pen as set forth in claim 3, wherein the water-soluble polymer is a cellulose derivative.

8. A water-based ink for ball pen as set forth in claim 7, wherein the number average molecular weight of the cellulose derivative is 7,000 to 400,000.

9. A water-based ink for ball pen as set forth in claims 3 to 8, wherein the content of the water-soluble polymer is 0.1 % by weight to 10 % by weight relative to the total amount of the ink composition.

10. A water-based ink for ball pen as set forth in claim 1 or 2, having thixotropy property.

11. A water-based ink for ball pen as set forth in claim 10, wherein the viscosity of the ink measured by an ELD viscometer (3°R14 cone, at the temperature of 20 ) is 1,500 to 10,000cps.

12. A water-based ink for ball pen as set forth in claim 1, comprising coloring pigment particles having the agglomerate phase of the histogram distribution in which the Pr value represented by image processing and conversion by a gray scale of an agglomerate phase of colored pigment particles is not less than 0.8 and Wr value(half bandwidth Ph/peak bandwidth Wp) is not more than 0.1.

13. A ball pen wherein a water-based ink comprising an agglomerate phase of a coloring pigment in which pigment particles gather in a dotted manner, water-soluble organic pigment, water, and polysaccharides is filled in an ink reservoir.

14. A ball pen wherein a water- based ink comprising a coloring pigment gathering to form in the same pigment phase in a dotted manner, a complex agglomerate phase, water-soluble organic solvent, water, and polysaccharides is filled in an ink reservoir.
